(19)

**Europäisches Patentamt**
**European Patent Office**
**Office européen des brevets**

(11) **EP 0 922 325 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(51) Int Cl.:
*B60L 15/20* (2006.01)  *H02P 23/14* (2006.01)
*H02P 23/03* (2006.01)

(21) Anmeldenummer: **98933541.9**

(22) Anmeldetag: **15.05.1998**

(86) Internationale Anmeldenummer:
**PCT/DE1998/001353**

(87) Internationale Veröffentlichungsnummer:
**WO 1998/053551 (26.11.1998 Gazette 1998/47)**

(54) **VERFAHREN ZUR STEUERUNG EINER ASYNCHRONMASCHINE**

METHOD FOR CONTROLLING AN ASYNCHRONOUS MACHINE

PROCEDE DE REGULATION D'UNE MACHINE ASYNCHRONE

(84) Benannte Vertragsstaaten:
**DE ES FR GB IT SE**

(30) Priorität: **16.05.1997 DE 19720697**

(43) Veröffentlichungstag der Anmeldung:
**16.06.1999 Patentblatt 1999/24**

(73) Patentinhaber: **ROBERT BOSCH GMBH**
**70442 Stuttgart (DE)**

(72) Erfinder: **SCHENK, Robert**
**D-71701 Schwierdingen (DE)**

(56) Entgegenhaltungen:
**US-A- 4 823 066  US-A- 5 479 081**

• **GROTSTOLLEN H ET AL: "BETRIEB DER ASYNCHRONMASCHINE IM FELDSCHWAECHBEREICH" 1. Mai 1994 , ELEKTROTECHNISCHE ZEITSCHRIFT - ETZ, VOL. 115, NR. 9, PAGE(S) 484, 487/488, 490/491 XP000451471 in der Anmeldung erwähnt siehe das ganze Dokument**

**Beschreibung**

Stand der Technik

Die Erfindung geht aus von einem Verfahren zur Steuerung einer Asynchronmaschine, die unterhalb der Eckfrequenz im Grunddrehzahlbereich mit variablem Magnetisierungsstrom und die oberhalb der Eckfrequenz im Feldschwächbereich betrieben wird, gemäß der im Oberbegriff des Anspruchs 1 definierten Gattung.

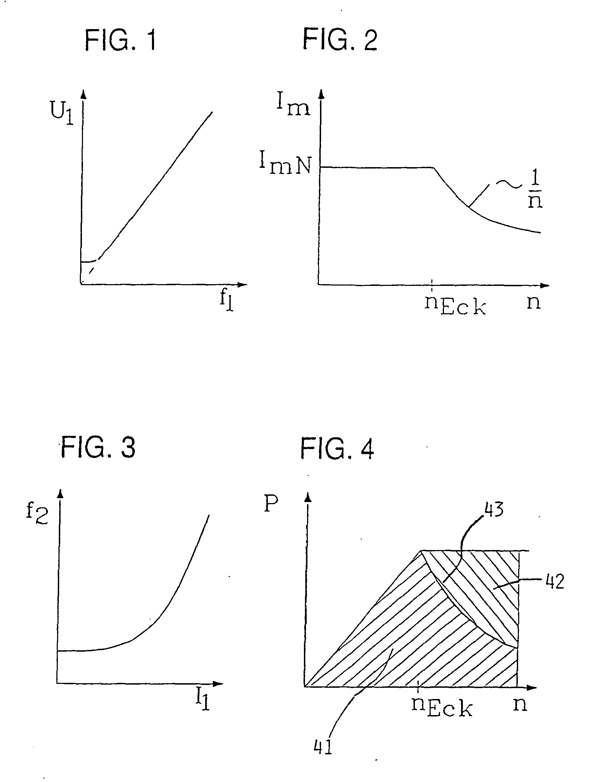

Drehzahlgeregelte Asynchronmaschinen werden bei Anwendungen, die keine hohe Dynamik erfordern, an Frequenzumrichtern betrieben. Dabei wird ausgehend vom Nennpunkt der Asynchronmaschine bei fallender Drehzahl das Verhältnis von Strangspannung $U_1$ zur Statorfrequenz $f_1$ konstant gehalten, wie dies der in Fig. 1 dargestellten Kennlinie zu entnehmen ist. Damit ergibt sich ein bei jeder Drehzahl n konstanter Magnetisierungsstrom $I_m$, der auch von der Belastung unabhängig ist. Der Nennpunkt der Asynchronmaschine ist so gewählt, daß die Asynchronmaschine an der gegebenen Zwischenkreisspannung $U_{zw}$ gerade noch den Nennmagnetisierungsstrom aufnehmen kann. Wird die Drehzahl n darüber hinaus erhöht, kann die Spannung $U_1$ vom Umrichter nicht proportional zur Statorfrequenz $f_1$ gehalten werden, sondern bleibt konstant. Damit stellt sich nun der Magnetisierungsstrom $I_m$ proportional zu $U_{1max}/n$ ein, da sich die Statorfrequenz $f_1$, abgesehen von dem geringen Schlupf, wiederum proportional zur Drehzahl n verhält, wie dies in Fig. 2 an Hand der sogenannten 1/n Steuerkurve dargestellt ist. Zu dieser Lösung ist festzuhalten, daß sie einfach, robust und für viele Anwendungen ausreichend ist.

Bei hochdynamischen Antrieben setzt sich die sogenannte Feldorientierte Regelung durch, die eine schnelle Momentenverstellung ermöglicht. Die Einstellung des Erregerstroms erfolgt dabei nach dem Prinzip der U/f-Steuerung, daß nämlich im Grunddrehzahlbereich bis zum Eckpunkt, der Eckfrequenz oder Eckdrehzahl $n_{eck}$, der Magnetisierungsstrom Im konstant gehalten wird. Darüber hinaus wird bei höheren Frequenzen der Magnetisierungsstrom $I_m$ gemäß der Kennlinie 1/n im Feldschwächbereich abgesenkt, wie dies der Kennlinie gemäß Fig. 2 zu entnehmen ist. Da sowohl die Zwischenkreisspannung als auch der Magnetisierungsstrom konstant sind, ändert sich auch der Eckpunkt nicht. Eine solche Steuerungsart liegt auch derjenigen zugrunde, die in einem Artikel von H. Grotstollen und J. Wiesing in ETZ Band 115 (1994) Heft 9, S. 486 - 491, beschrieben ist.

Anwendungen von drehzahlverstellbaren Antrieben wie in Elektrofahrzeugen, erfordern in jedem Betriebspunkt eine möglichst hohe Ausnutzung der vorhandenen Energie. Die vorstehend beschriebene Steuerfunktion des Magnetisierungsstroms $I_m$ führt im Grunddrehzahlbereich, also für Drehzahlen unterhalb der Nenndrehzahl bzw. Eckdrehzahl $n_{eck}$, zu einem niedrigen wirkungsgrad bei Teillast.

Zu jedem Betrag des Statorstromes $I_1$ läßt sich im Grunddrehzahlbereich die optimale Aufteilung des Statorstromes $I_1$ in den Magnetisierungsstrom $I_m$ und den Läuferstrom $I_2$ berechnen. Diese Aufteilung läßt sich bei einem gegebenen Statorstrom $I_1$ durch die Läuferfrequenz $f_2$ einstellen. Die jeweils zugehörigen Wertepaare lassen sich tabellarisch oder in einer Steuerkennlinie darstellen, wie sie in Fig. 3 gezeigt ist. Somit wird bei diesem Steuerverfahren der Betriebspunkt über den Statorstrom $I_1$ und die Läuferfrequenz $f_2$ nach dem sogenannten Strom-Schlupf-Verfahren festgelegt.

Mit steigendem Strom und steigender Drehzahl erhöht sich auch bei diesem Verfahren die Statorspannung $U_1$. Bei der Eckdrehzahl $n_{eck}$ wird die maximale Statorspannung erreicht. Allerdings hängt diese Eckdrehzahl $n_{eck}$ von der Höhe des Statorstroms $I_1$ ab, da bei kleinerem Statorstrom $I_1$ der zugehörige Magnetisierungsstrom $I_m$ auch kleiner ist und entsprechend auch die induzierte Statorspannung $U_1$. Somit wird bei kleinerem Statorstrom $I_1$ die Spannungsgrenze erst bei einer höheren Drehzahl n erreicht, wie dies aus der Kennlinie gemäß Fig. 4 erkennbar ist.

Bei Anwendung der Asynchronmaschine für Antriebe von Elektrofahrzeugen wird die Eckdrehzahl auch durch die Batteriespannung bestimmt. Je nach dem Ladezustand und der Belastung schwankt die Batteriespannung. Typisch für heutige Traktionsbatterien sind bei Leerlaufspannungen von 300 V Mindestbetriebsspannungen von ca. 200 V beim Antreiben und bis zu 400 V beim Rekuperieren. Entsprechend diesen unterschiedlichen Spannungswerten stellt sich jeweils eine andere Eckdrehzahl $n_{eck}$ ein.

Bei Betrieb jenseits der Spannungsgrenzkurve wird der momenten- bzw. wirkungsgrad-optimale Betrieb jeweils bei Ausnutzung der maximalen Spannung erreicht.

Somit besteht bei der Strom-Schlupf-Steuerung die Aufgabe, zu dem jeweiligen Strom bei der augenblicklichen Spannung der Batterie oder des Zwischenkreises, die passende Rotor- bzw. Läuferfrequenz $f_2$ einzustellen.

Bei einer im VW-Hybrid angewandten Steuerung wird diese Aufgabe von einer elektronischen Schaltung gelöst. Dieser elektronische Regelkreis erlaubt jedoch eine Verstellung von Zeitkonstanten nur durch Änderung von Bauteilen. Dies ist somit sehr starr oder umständlich und unterstützt somit keine Anwendung im Fahrzeug.

Es wird daher nach einer Möglichkeit gesucht, diesen Regelkreis durch ein Verfahren zu ersetzen, das flexibel, kostengünstig und einfach durchzuführen ist. Dies möglichst mit bereits vorhandenen Bauteilen.

Vorteile der Erfindung

Das erfindungsgemäße Verfahren zur Steuerung einer Asynchronmaschine mit den kennzeichnenden Merkmale des Anspruchs 1 hat gegenüber den bekannten Verfahren den Vorteil, daß unter Ausnutzung der möglichen Spannungsgrenzen sowohl im Grunddrehzahlbereich als auch im Feldschwächbereich die vorhandene Batterie- oder Zwischenkreisspannung optimal ausgenutzt wird, weil die zu den aktuellen Werten passende Rotorfrequenz sehr zeitnah ermittelt wird und für die Steuerung eingesetzt werden kann.

Gemäß der Erfindung wird dies prinzipiell dadurch erreicht, daß aus der vorhandenen Zwischenkreis- oder Batteriespannung die maximal mögliche Grundschwingung der Statorspannung bestimmt wird, ein Statorstrom als Sollwert vorgegeben und in die Asynchronmaschine eingeprägt wird, diejenige Rotorfrequenz berechnet wird, die benötigt wird, um bei dieser Vorgabe der Statorspannung den Stromsollwert einzuprägen, die über die Steuerkennlinie dem Stromsollwert zugehörige Rotorfrequenz mit der berechneten Rotorfrequenz verglichen wird und derjenige Rotorfrequenzwert, welcher der größere der beiden ist, zur Bestimmung des Stromsollwertes herangezogen wird.

Durch die in den weiteren Ansprüchen niedergelegten Maßnahmen sind vorteilhafte Weiterbildungen und Ausgestaltungen des im Anspruch 1 angegebenen Verfahrens möglich.

Eine erste sehr vorteilhafte Ausgestaltung sieht zur aktuellen und sehr zeitnahen Ermittlung der passenden Rotorfrequenz vor, daß die Berechnung des Wertes der Rotorfrequenz in bestimmten Abtastzeitintervallen durchgeführt wird.

Eine weitere, insbesondere den Wirkungsgrad besonders steigernde Weiterbildung des erfindungsgemäßen Verfahrens sieht vor, daß die Berechnung der Rotorfrequenz derart erfolgt, daß die Asynchronmaschine sowohl im Grunddrehzahlbereich als auch im Feldschwächbereich jeweils an der Spannungsgrenze betreibbar ist bzw. betrieben wird.

Um auch bei unterschiedlichen Temperaturen den jeweils optimalen Wirkungsgrad und die optimale Ausnutzung der vorhandenen Speisespannung sicher zu stellen, wird entsprechend einer sehr vorteilhaften Weiterbildung des erfindungsgemäßen Verfahrens die Berechnung der Rotorfrequenz bei aufgrund von Temperatureinflüssen korrigierten Werten von Grundfrequenz und/oder Magnetisierungsstrom und/oder ohmschem Läuferwiderstand durchgeführt.

Entsprechend einer besonders vorteilhaften Ausgestaltung der Erfindung wird die Berechnung der Rotorfrequenz mit einem Mikroprozessor durchgeführt. Dadurch kann diese sehr flexibel und auch aktuell ermittelt werden.

Eine besonders vorteilhafte Berechnungsmethode für das erfindungsgemäße Verfahren ist Gegenstand einer weiteren sehr vorteilhaften Ausgestaltung der Erfindung nieder gelegt. Danach wird die Berechnung der Rotorfrequenz nach folgendem grundsätzlichen Ablauf durchgeführt:

Initialisieren zu bestimmten Zeiten,
Vorgabe des Stromsollwertes,
Bestimmung der dazugehörigen Grund-Rotorfrequenz, gegebenenfalls temperaturkompensiert,
Berechnung der Statorspannung,
Berechnung der Haupt-Magnetisierungsspannung in Abhängigkeit vom Phasenwinkel,
Berechnung des Magnetisierungsstroms,
Berechnung des Läuferstroms,
Berechnung der Rotorfrequenz,
Begrenzung der berechneten Rotorfrequenz auf einen Wert kleiner als es der Kippfrequenz entspricht,
Berechnung der Phasenwinkels,
Vergleichen, ob die berechnete Rotorfrequenz größer als die Grund-Rotorfrequenz ist,
wenn ja, dann Setzen der sekundären Rotorfrequenz gleich der berechneten Rotorfrequenz,
wenn nein, dann Setzen der sekundären Rotorfrequenz gleich der Grund-Rotorfrequenz,
schließlich Rückkehr zum Anfang der Berechnungsfolge.

In vorteilhafter und besonders zweckmäßiger Weise findet das erfindungsgemäße Verfahren Verwendung bei aus Batterien gespeisten Asynchronmaschinen in Elektrofahrzeugen.

Zeichnung

Die Erfindung ist anhand eines in der Zeichnung dargestellten Ausführungsbeispiels in der nachfolgenden Beschreibung näher erläutert. Es zeigen:

Fig. 1    die Kennlinie der Stator- bzw. Strangspannung $U_1$ über der Ständerfrequenz $f_1$, deren Verhältnis im wesentlichen konstant ist;

Fig. 2    die Kennlinie des Magnetisierungsstromes $I_m$ über der Drehzahl n, wobei der Nennmagnetisierungsstrom $I_{mN}$ bis zur Eckdrehzahl $n_{eck}$ konstant ist;

Fig. 3    die nichtlineare Kennlinie der Rotorfrequenz $f_2$ über dem Stator- bzw. Strangstrom $I_1$;

Fig. 4    die Leistung P und damit auch Spannung und Strom über der Drehzahl n mit dem Grunddrehzahlbereich und dem Feldschwächbereich sowie der Spannungsgrenze;

Fig. 5    schematisch das Ablaufdiagramm zur Berechnung der Rotorfrequenz $f_{alg}$;

Fig. 6    das einphasige Ersatzschaltbild einer Asynchronmaschine;

Fig. 7    das zum Ersatzschaltbild gehörende Zeigerdiagramm, und

Fig. 8    ein Zeigerdiagramm zur Ableitung einiger Gleichungen, die zur Berechnung der Rotorfrequenz benutzt werden.

Beschreibung des Ausführungsbeispiels

In Fig. 1 ist die Kennlinie der Strangspannung $U_1$ über der Ständerfrequenz $f_1$ aufgetragen. Das Verhältnis dieser beiden Größen ist im wesentlichen konstant. Diese Kennlinie dient insbesondere zur Darstellung der Verhältnisse bei drehzahlgeregelten Asynchronmaschinen, bei den keine hohen Anforderungen an die Dynamik gestellt werden und die an Frequenzumrichtern betrieben werden. Dabei wird ausgehend vom Nennpunkt der Asynchronmaschine bei fallender Drehzahl das Verhältnis von Strangspannung $U_1$ zu Stator- bzw. Ständerfrequenz $f_1$ konstant gehalten. Damit ergibt sich bei jeder Drehzahl ein konstanter Magnetisierungsstrom $I_m$, der auch von der Belastung unabhängig ist.

In der in Fig. 2 dargestellten Kennlinie ist dies wiedergegeben. Die Fig. 2 zeigt den Magnetisierungsstromes $I_m$ über der Drehzahl n, wobei der Nennmagnetisierungsstrom $I_{mN}$ bis zur Eckdrehzahl $n_{eck}$ konstant ist. Jenseits der Eckdrehzahl $n_{eck}$ nimmt der Magnetisierungsstrom $I_m$ umgekehrt zur Drehzahl, also mit 1/n ab. Der Nennpunkt der Asynchronmaschine ist so gewählt, daß die Asynchronmaschine an der gegebenen Batteriespannung oder der gegebenen Zwischenkreisspannung $U_{zw}$ gerade noch den Nennmagnetisierungsstrom aufnehmen kann. Wird die Drehzahl n darüber hinaus erhöht, kann die Spannung $U_1$ vom Umrichter nicht proportional zur Statorfrequenz $f_1$ gehalten werden, sondern bleibt konstant. Damit stellt sich nun der Magnetisierungsstrom $I_m$ proportional zu $U_{1max}/n$ ein, da sich die Statorfrequenz $f_1$, abgesehen von dem geringen Schlupf, wiederum proportional zur Drehzahl n verhält, wie dies in Fig. 2 an Hand der sogenannten 1/n Steuerkurve dargestellt ist.

In Fig. 3 ist die nichtlineare Kennlinie der Rotorfrequenz $f_2$ über dem Stator- bzw. Strangstrom $I_1$ aufgetragen. Zu jedem Betrag des Statorstromes $I_1$ läßt sich im Grunddrehzahlbereich die optimale Aufteilung des Statorstromes $I_1$ in den Magnetisierungsstrom $I_m$ und den Läuferstrom $I_2$ berechnen. Diese Aufteilung läßt sich bei einem gegebenen Statorstrom $I_1$ durch die Läuferfrequenz $f_2$ einstellen. Die jeweils zugehörigen Wertepaare lassen sich tabellarisch oder in einer Steuerkennlinie darstellen, wie sie in Fig. 3 gezeigt ist. Somit wird bei diesem Steuerverfahren der Betriebspunkt über den Statorstrom $I_1$ und die Läuferfrequenz $f_2$ nach dem sogenannten Strom-Schlupf-Verfahren festgelegt.

Mit steigendem Strom und steigender Drehzahl erhöht sich auch bei diesem Verfahren die Statorspannung $U_1$. Bei der Eckdrehzahl $n_{eck}$ wird die maximale Statorspannung erreicht. Allerdings hängt diese Eckdrehzahl $n_{eck}$ von der Höhe des Statorstroms $I_1$ ab, da bei kleinerem Statorstrom $I_1$ der zugehörige Magnetisierungsstrom $I_m$ auch kleiner ist und entsprechend auch die induzierte Statorspannung $U_1$. Somit wird bei kleinerem Statorstrom $I_1$ die Spannungsgrenze erst bei einer höheren Drehzahl n erreicht, wie dies aus der Kennlinie gemäß Fig. 4 erkennbar ist.

In Fig. 4 ist die Leistung P und damit auch Spannung und Strom über der Drehzahl n mit dem Grunddrehzahlbereich 41 und dem Feldschwächbereich 42 sowie der Spannungsgrenze 43 dargestellt. Wie diese Figur zeigt, kann hier davon gesprochen werden, daß der Grunddrehzahlbereich über die Eckdrehzahl $n_{eck}$ hinaus erweitert ist. Mit steigendem Strom und steigender Drehzahl erhöht sich auch bei diesem Verfahren die Statorspannung $U_1$. Bei der Eckdrehzahl $n_{eck}$ wird die maximale Statorspannung erreicht. Allerdings hängt diese Eckdrehzahl $n_{eck}$ von der Höhe des Statorstroms $I_1$ ab, da bei kleinerem Statorstrom $I_1$ der zugehörige Magnetisierungsstrom $I_m$ auch kleiner ist und entsprechend auch die induzierte Statorspannung $U_1$. Somit wird bei kleinerem Statorstrom $I_1$ die Spannungsgrenze erst bei einer höheren Drehzahl n als es der Eckdrehzahl $n_{eck}$ entspricht, erreicht, wie dies aus der Kennlinie gemäß Fig. 4 erkennbar ist.

Wie bereits eingangs ausgeführt, wird bei Anwendung der Asynchronmaschine für Antriebe von Elektrofahrzeugen die Eckdrehzahl auch durch die Batteriespannung bestimmt. Je nach dem Ladezustand und der Belastung schwankt die Batteriespannung. Typisch für heutige Traktionsbatterien sind bei Leerlaufspannungen von 300 V Mindestbetriebsspannungen von ca. 200 V beim Antreiben und bis zu 400 V beim Rekuperieren. Entsprechend diesen unterschiedlichen Spannungswerten stellt sich jeweils eine andere Eckdrehzahl $n_{eck}$ ein.

Das erfindungsgemäße Verfahren stellt einen Algorithmus bzw. eine Berechnungsmethode zur Verfügung, durch den erkannt wird, wann die Spannungsgrenze erreicht ist und bei weiterer Drehzahlerhöhung die Rotorfrequenz $f_2$ so anhebt bzw. für sie einen Wert angibt, daß genau die zur Verfügung stehende Spannung ausgenutzt wird.

Dem erfindungsgemäßen Verfahren liegt der Gedanke zu Grunde aus der vorhandenen Zwischenkreis- oder Batteriespannung $U_B$ die maximal mögliche Grundschwingung der Strang- oder Statorspannung $U_1$ zu bestimmen, einen Strang- oder Statorstrom $I_1$ als Sollwert vorzugeben und in die Maschine einzuprägen, diejenige Rotorfrequenz $f_{alg}$ zu berechnen, die benötigt wird, um bei dieser Vorgabe der Statorspannung $U_1$ den Stromsollwert $I_1$ einzuprägen.

Über die Steuerkennlinie, in Tabellenform vorliegend oder wie in Fig. 3 dargestellt, wird die dem Stromsollwert $I_1$ zugehörige Rotorfrequenz $f_2$ mit der berechneten Rotorfrequenz $f_{alg}$ verglichen. Derjenige Rotorfrequenzwert, welcher der größere der beiden ist, wird zur Bestimmung des Stromsollwertes $I_1$ herangezogen.

Diese Berechnung der Rotorfrequenz $f_{alg}$ wird in bestimmten Abtastzeitintervallen $T_A$ durchgeführt. Dadurch ist eine zeitnahe Ermittlung der Rotorfrequenz $f_2$ ermöglicht, die am geeignetsten ist, um die vorhandene Spannung am besten auszunutzen. Weiterhin wird die Berechnung der Rotorfrequenz $f_{alg}$ derart durchgeführt, daß die Asynchronmaschine sowohl im Grunddrehzahlbereich als auch im Feldschwächbereich jeweils an der Spannungsgrenze betreibbar ist bzw. betrieben wird.

Da die wesentlichen Parameterwerte von der Temperatur abhängig sind, werden bei der Berechnung der Rotorfrequenz $f_{2alg}$ von Temperatureinflüssen korrigierte Werte verwendet. Dies trifft insbesondere zu für die Grundfrequenz $f_2$, den Magnetisierungsstrom $I_m$ und den ohmschen Rotorwiderstand $R_2'$.

Die Berechnung der Rotorfrequenz $f_{2alg}$ wird in zweckmäßiger Weise mit einem Prozessor, insbesondere Mikroprozessor durchgeführt.

Um den Übergang vom Grunddrehzahlbereich in den Feldschwächbereich zu erläutern, wird angenommen, daß die Asynchronmaschine zunächst im Grunddrehzahlbereich betrieben und nun die Drehzahl erhöht wird. Bei diesem Vorgang soll der Stromsollwert unverändert bleiben. Über die Steuerkennlinie gemäß Fig. 3 ist mit diesem Strom $I_1$ ein bestimmter Wert der Rotorfrequenz $f_{2grund}$ verknüpft. In bestimmten Zeitintervallen $T_A$ berechnet der Mikroprozessor den Wert $f_{2alg}$ für die Rotorfrequenz. Im Grunddrehzahlbereich ist $f_{2alg}$ immer kleiner als $f_{2grund}$, da die Spannungsgrenze noch nicht erreicht ist. Bei einer Drehzahlerhöhung wird der Wert von $f_{2alg}$ größer, da dadurch der Rotorstrom $I_1$ anteilig steigt, während der Magnetisierungsstrom $I_m$ sinkt. Erreicht nun die Statorspannung $U_1$ ihren maximal möglichen Wert am Eckpunkt bei der Drehzahl $n_{eck}$, so sind die beiden Frequenzwerte $f_{2grund}$ und $f_{2alg}$ gleich. Bei weiterer Drehzahlerhöhung wird $f_{2alg}$ größer als $f_{2grund}$. Nun übernimmt der durch die Berechnung bzw. den Algorithmus bestimmte Wert für die Rotorfrequenz $f_{2alg}$ die Vorgabe der Rotorfrequenz und damit die Aufteilung der Ströme. Wie aus vorstehender Beschreibung klar wird, wird in beiden Drehzahlbereichen jeweils derjenige Wert der Frequenzen $f_{2grund}$ oder $f_{2alg}$ gewählt, welcher der größere der beiden ist. Damit ist dann ein stetiger Übergang zwischen den beiden Steuerungsarten erreicht und unerwünschte Momentensprünge werden vermieden.

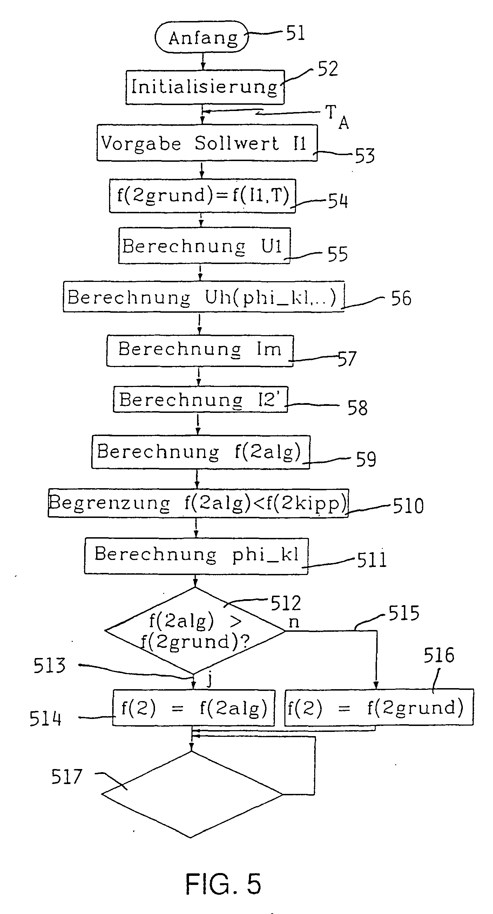

Anhand der Fig. 5 ist mittels eines Ablaufdiagramms schematisch dargestellt, wie die Berechnung der Rotorfrequenz $f_{alg}$ erfolgt.

Die Berechnung beginnt bei Anfang 51 und wird im Block 52 initialisiert zu bestimmten Zeiten bzw. in bestimmten Abtastzeitintervallen $T_A$. Bei Block 53 erfolgt die Vorgabe des Stromsollwertes $I_1$. Danach erfolgt in Block 54 die Bestimmung der dazugehörigen Grund-Rotorfrequenz $f_{2grund}$, entweder aufgrund einer Tabelle oder einer Steuerkennlinie wie in Fig. 3 dargestellt, in Abhängigkeit vom vorgegebenen Stromsollwert $I_1$. Dabei werden ggf. temperaturkompensierte Werte eingesetzt. In Block 55 erfolgt die Berechnung der Statorspannung $U_1$. Dazu wird beispielsweise

$$\text{Gleichung (1)} \qquad U_1 = U_B / \sqrt{6}$$

bei Sternschaltung und Speisung des Umrichters mit der Batteriespannung $U_B$ verwendet. In Block 56 erfolgt daraus die Berechnung der Haupt-Magnetisierungsspannung $U_H$ in Abhängigkeit vom Phasenwinkel $\varphi_{KL}$, der als bekannt, insbesondere vom vorherigen Berechnungsgang, vorausgesetzt wird. Dazu wird

$$\text{Gleichung (2)}$$
$$U_h = \sqrt{(U_1 - R_1 I_1 \cos \varphi_{kl} - \sigma X_1 I_1 \sin \varphi_{kl})^2 + (-R_1 I_1 \sin \varphi_{kl} + \sigma X_1 I_1 \cos \varphi_{kl})^2}$$

verwendet.

In Block 57 wird mit Hilfe der

$$\text{Gleichung (3)} \quad U_h = 2\pi f_1 (1 - \sigma(I_m)) L_1(I_m) I_m$$

die Berechnung des Magnetisierungsstroms $I_m$ aus der Haupt-Magnetisierungsspannung $U_H$ und der Statorfrequenz $f_1$ durchgeführt, wenn die Funktion $G(I_m)$ gemäß

$$\text{Gleichung (4)} \quad G(I_m) = (1 - \sigma(I_m)) L_1(I_m) I_m$$

als Speicherwert vorhanden ist. In dieser Funktion $G(I_m)$ sind alle vom Magnetisierungsstroms $I_m$ abhängige Größen zusammengefaßt. Anhand der

$$\text{Gleichung (5)} \quad I_2' = \sqrt{I_1^2 - I_m^2}$$

wird in Block 58 der Läuferstrom $I_2$' berechnet und daraus erfolgt dann in Block 59 mit Hilfe der

$$\text{Gleichung (6)} \quad f_{2alg} = I_2' R_2'(T) f_1 / U_h$$

die Berechnung der Rotorfrequenz $f_{2alg}$, wobei auch hier gegebenenfalls eine Temperaturkorrektur vorgenommen wird.

Dieser mit dem gefundenen Algorithmus berechnete Wert der Rotorfrequenz $f_{2alg}$ wird nunmehr auf seinen absoluten Wert hin überprüft und in Block 510 auf einen Wert begrenzt, welcher kleiner ist als es der Kippfrequenz $f_{kipp}$ entspricht, weil er den vorberechneten Wert dieser Kippfrequenz $f_{kipp}$ nicht überschreiten soll. Ist der Wert für $f_{2alg}$ größer als der Wert $f_{kipp}$, dann wird $f_{2alg} = f_{kipp}$ gesetzt. Dies stellt einen guten wirkungsgrad sicher, da anderenfalls Betriebspunkte eingestellt werden, die einen unnötig niedrigen Wirkungsgrad aufweisen.

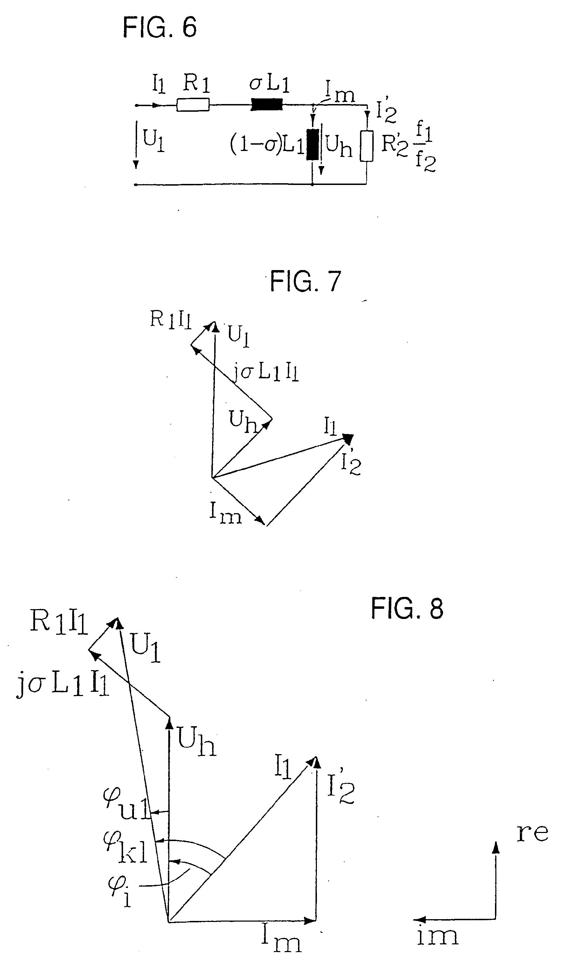

Mit den so ermittelten Werten des Zeigerdiagramms, wie es in Fig. 6 und speziell in Fig. 8 dargestellt ist, erfolgt nunmehr in Block 511 die Berechnung der Phasenwinkels $\varphi_{KL}$, des Winkels zwischen der an den Klemmen, vergleiche Fig. 6, anliegenden Stator- oder Strangspannung $U_1$ und dem eingeprägten Stator- oder Strangstrom $I_1$. Diese Berechnung ergibt einen genaueren Wert für den Phasenwinkel $\varphi_{KL}$, als er vorher für die Berechnung der anderen Größen, insbesondere letztlich der Rotorfrequenz $f_{2alg}$, zugrunde gelegen hat. Im Zeigerdiagramm gemäß Fig. 8 sind die dazu nötigen Größen dargestellt und die entsprechenden Winkel eingetragen. Mit

$$\text{Gleichung (7)} \quad \varphi_i = \text{atan2}\left( I_m, I_2' \right)$$

wird der Winkel $\varphi_i$ zwischen dem Statorstrom $I_1$ und der Haupt-Magnetisierungsspannung $U_H$ in Abhängigkeit vom Magnetisierungsstrom $I_m$ und dem Läuferstrom $I_2$' bestimmt. Mit

$$\text{Gleichung (8)} \quad U_{1im} = -R_1 I_1 \sin\varphi_i + \sigma X_1 I_1 \cos\varphi_i$$

wird ein Wert $U_{1im}$ bestimmt, der zur Bestimmung des Winkels $\varphi_{U1}$ zwischen der Strangspannung $U_1$ und der Haupt-Magnetisierungsspannung $U_H$ nötig ist, und mit

$$\text{Gleichung (9)} \quad U_{1re} = U_h + R_1 I_1 \cos\varphi_i + \sigma X_1 I_1 \sin\varphi_i$$

wird ein zweiter Wert $U_{1re}$ bestimmt, der zur Bestimmung des Winkels $\varphi_{U1}$ zwischen der Strangspannung $U_1$ und der Haupt-Magnetisierungsspannung $U_H$ nötig ist. Mit

Gleichung (10)    $\varphi_{U1} = \text{atan2}(U_{1im}, U_{1re})$

wird nunmehr der Wert des Winkels $\varphi_{U1}$ berechnet.

Der Wert für den Phasenwinkel $\varphi_{KL}$ ergibt sich dann gemäß

Gleichung (11) zu    $\varphi_{kl} = \varphi_i + \varphi_{U1}$

Dieser Wert wird für die nächste Berechnung der Rotorfrequenz $f_{2alg}$ im nächsten Zeitabschnitt zur Verfügung gestellt.

In Block 512 wird verglichen, ob die berechnete Rotorfrequenz $f_{2alg}$ größer als die Grund-Rotorfrequenz $f_{2grund}$ ist. Wenn dies der Fall ist, dann wird über eine Ja-Leitung 513 zu Block 514 verzweigt und die Rotorfrequenz $f_2$ gleich der berechneten Rotorfrequenz $f_{2alg}$ gesetzt. Wenn dies nicht der Fall ist, dann wird über eine Nein-Leitung 515 zu Block 516 verzweigt und die Rotorfrequenz $f_2$ gleich der Grund-Rotorfrequenz $f_{2grund}$ gesetzt.

Von den Blöcken 514 bzw. 516 geht es schließlich zu Block 517, wo die gesetzte Läuferfrequenz so lange verwendet wird, bis durch den Ablauf eines Abtastintervalls $T_A$ schließlich zum Anfang der Berechnungsfolge zurückgekehrt wird und sich der Algorithmus wiederholt.

Die in den vorstehend genannten Gleichungen (1) bis (11) aufgeführten Größen und Beziehungen sind aus dem Ersatzschaltbild der Asynchronmaschine, wie es in Fig. 6 dargestellt ist, zu entnehmen. So liegt an den Klemmen die Strang- oder Statorspannung $U_1$ an. Der zugehörige Strang- oder Statorstrom $I_1$ fließt durch den ohmschen Statorwiderstand $R_1$ und die Streuinduktivität $\sigma L_1$ und teilt sich dann in den Magnetisierungsstrom $I_m$ und den Läuferstrom $I_2'$ auf. Durch den Magnetisierungsstrom $I_m$ wird in der Hauptinduktivität $(1-\sigma)L_1$ die Haupt-Magnetisierungsspannung $U_h$ induziert. Der Läuferstrom $I_2'$ fließt durch den Läufer- oder Rotorwiderstand $R_2'f_1/f_2$, der parallel zur Hauptinduktivität $(1-\sigma)L_1$ liegt. In Fig. 7, sowie Fig. 8 mit realem re und imaginären im Teil rechts in Fig. 8 angedeutet, ist das zu diesem Ersatzschaltbild zugehörige Zeigerdiagramm dargestellt. Die jeweiligen elektrischen Größen und die Winkel sind an den einzelnen Pfeilen in den Zeigerdiagrammen eingetragen.

In vorteilhafter Weise wird durch die Erfindung ein Verfahren zur Verfügung gestellt, das von einem Mikroprozessor abgearbeitet werden kann und das es für Strom-Schlupf-Steuerverfahren ermöglicht, die Rotorfrequenzen im Feldschwächbereich zu berechnen. Dabei wird insbesondere der momentenoptimale Betrieb im Grunddrehzahlbereich nicht beeinträchtigt, weil der Übergang zwischen den beiden Betriebsbereichen nicht fest vorgegeben wird, sondern sich aus der Berechnung, dem Algorithmus ergibt. Dies ist insbesondere bei den bevorzugten Anwendungen in Elektrofahrzeugen wichtig, da die Eckdrehzahl, also der Übergang zwischen den beiden Betriebsarten, aufgrund der stark schwankenden Batteriespannung als auch aufgrund der Eigenart des momentenoptimalen Betriebs stark schwanken kann. Vorteilhaft ist auch die Vermeidung von Schwingungen am Eckpunkt.

**Patentansprüche**

1.  Verfahren zur Steuerung einer Asynchronmaschine, die durch Vorgabe einer entsprechenden Rotorfrequenz im Grunddrehzahlbereich mit variablem Magnetisierungsstrom ($I_m$) und im Feldschwächbereich mit maximaler Spannung betrieben wird, und ein Statorstrom ($I_1$) als Sollwert vorgegeben und in die Asynchronmaschine eingeprägt wird, **dadurch gekennzeichnet, daß**

    aus der vorhandenen Zwischenkreis- und Batteriespannung ($U_B$) die maximal mögliche Grundschwingung ($U_{1max}$) der Statorspannung ($U_1$) bestimmt wird,

    diejenige Rotorfrequenz ($f_{2alg}$) berechnet wird, die benötigt wird, um bei dieser Vorgabe der Statorspannung ($U_1$) den Stromsollwert einzuprägen,

    über eine Steuerkennlinie eine dem Stromsollwert (11) und dem gewünschten variablen Magnetisierungsstrom zugehörige Grundrotorfrequenz ($f_{2grund}$) ermittelt und mit der berechneten Rotorfrequenz ($f_{2alg}$) verglichen wird und derjenige Rotorfrequenzwert, welcher der größere der beiden ist, zur Bestimmung der Steuergrößen für die Asynchronmaschine herangezogen wird.

2.  Verfahren nach Anspruch 1, **dadurch gekennzeichnet, daß** die Berechnung des Wertes der Rotorfrequenz ($f_{2alg}$) in bestimmten Abtastzeitintervallen ($T_A$) durchgeführt wird.

3.  Verfahren nach einem der vorigen Ansprüche, **dadurch gekennzeichnet, daß** die Berechnung der Rotorfrequenz

($f_{2alg}$, $f_{2grund}$) bei aufgrund von Temperatureinflüssen korrigierten Werten durchgeführt wird.

4. Verfahren nach einem der vorigen Ansprüche, **dadurch gekennzeichnet, daß** die Berechnung der Rotorfrequenz ($f_{2alg}$) mit einem Mikroprozessor durchgeführt wird.

5. Verfahren nach einem der vorigen Ansprüche, **dadurch gekennzeichnet, daß** die Berechnung der Rotorfrequenz ($f_{2alg}$) nach folgendem grundsätzlichen Ablauf durchgeführt wird:

Initialisieren (51, 52) zu besimmten Zeiten ($T_A$), Vorgabe (53) des Stromsollwertes ($I_1$), Bestimmung (54) der dazu gehörigen Grund-Rotorfrequenz ($f_{2grund}$), gegebenenfalls temperaturkompensiert, Berechnung (55) der maximal möglichen Grundschwingung der Statorspannung ($U_1$), Berechnung (56) der Haupt-Magnetisierungsspannung ($U_H$) in Abhängigkeit vom Phasenwinkel ($\varphi_{KL}$),
Berechnung (57) des Magnetisierungsstroms ($I_m$),
Berechnung (58) des Läuferstromes ($I_{2'}$),
Berechnung (59) der Rotorfrequenz ($f_{2alg}$),
Begrenzung (510) der Rotorfrequenz ($f_{2alg}$) auf einen Wert kleiner als es der Kippfrequenz ($f_{kipp}$) entspricht,
Berechnung (511) des Phasenwinkels ($\varphi_{KL}$),
Vergleichen (512), ob die berechnete Rotorfrequenz ($f_{2alg}$) größer als die Grund-Rotorfrequenz ($f_{2grund}$) ist,
wenn ja (513), dann Setzen (514) der sekundären Rotorfrequenz (f2) gleich der berechneten Rotorfrequenz ($f_{2alg}$),
wenn nein (515), dann Setzen (516) der sekundären Rotorfrequenz (f2) gleich der Grund-Rotorfrequenz ($f_{2grund}$),
schließlich Rückkehr zum Anfang der Berechnungsfolge.

6. Verwendung des Verfahrens nach einem der vorigen Ansprüche bei aus Batterien gespeisten Asynchronmaschinen in Elektrofahrzeugen.


**Claims**

1. Method for controlling an asynchronous machine which is operated, by presetting an appropriate rotor frequency, with a variable magnetization current ($I_m$) in the basic rotation speed range and with the maximum voltage in the speed variation by field control range, and a stator current ($I_1$) is predetermined as a nominal value and is applied to the asynchronous machine,
**characterized in that**
the maximum possible fundamental oscillation ($U_{1max}$) of the stator voltage ($U_1$) is determined from the existing intermediate-circuit and battery voltage ($U_B$),
that rotor frequency ($f_{2alg}$) is calculated which is required in order to apply the current nominal value for this preset stator voltage ($U_1$),
a control characteristic is used to determine a fundamental rotor frequency ($f_{2fundamental}$) which is associated with the current nominal value ($I_1$) and the desired variable magnetization current, and is compared with the calculated rotor frequency ($f_{2alg}$), and that rotor frequency value which is the greater of the two is used to determine the control variables for the asynchronous machine.

2. Method according to Claim 1, **characterized in that** the value of the rotor frequency ($f_{2alg}$) is calculated at specific sampling time intervals ($T_A$).

3. Method according to one of the preceding claims, **characterized in that** the rotor frequency ($f_{2alg}$, $f_{2fundamental}$) is calculated for values corrected for temperature influences.

4. Method according to one of the preceding claims, **characterized in that** the rotor frequency ($f_{2alg}$) is calculated using a microprocessor.

5. Method according to one of the preceding claims, **characterized in that** the rotor frequency ($f_{2alg}$) is calculated using the following fundamental procedure:

Initialization (51, 52) at specific times ($T_A$), presetting (53) of the nominal current value ($I_1$), determination (54) of the fundamental rotor frequency ($f_{2fundamental}$) associated with it, if appropriate with temperature compensation, calculation (55) of the maximum possible fundamental oscillation of the stator voltage ($U_1$), calculation (56) of

the main magnetization voltage ($U_H$) as a function of the phase angle ($\varphi_{KL}$),
calculation (57) of the magnetization current ($I_m$),
calculation (58) of the rotor current ($I_{2'}$),
calculation (59) of the rotor frequency ($f_{2alg}$),
limiting (510) of the rotor frequency ($f_{2alg}$) to a value less than that corresponding to the limit frequency ($f_{limit}$),
calculation (511) of the phase angle ($\varphi_{KL}$),
comparison (512) to determine whether the calculated rotor frequency ($f_{2alg}$) is greater than the fundamental rotor frequency ($f_{2fundamental}$),
if yes (513), then setting (514) of the secondary rotor frequency (f2) to be equal to the calculated rotor frequency ($f_{2alg}$), and if no (515), then setting (516) of the secondary rotor frequency (f2) to be equal to the fundamental rotor frequency ($f_{2fundamental}$), and finally return to the start of the calculation procedure.

6. Use of the method according to one of the preceding claims for asynchronous machines fed from batteries in electrically powered vehicles.

**Revendications**

1. Procédé de commande d'une machine asynchrone fonctionnant par la prédéfinition d'une fréquence de rotor correspondante dans la plage de la vitesse de rotation fondamentale avec un courant d'aimantation variable ($I_m$) et une plage de champ faible à tension maximale et un courant de stator ($I_1$) comme valeur de consigne, et appliqué à la machine asynchrone,
**caractérisé en ce qu'**
à partir de la tension de batterie et du circuit intermédiaire ($U_B$), existant, on détermine l'oscillation fondamentale maximale possible ($U_{1max}$) de la tension de stator ($U_1$),
on calcule la fréquence respective du rotor ($f_{2alg}$) nécessaire pour appliquer la valeur de consigne de l'intensité pour cette tension de stator prédéfinie ($U_1$),
par une courbe caractéristique de commande on détermine une fréquence de base de rotor ($f_{2grund}$) associée à la valeur de consigne du courant ($I_1$) et au courant d'aimantation variable souhaité et on compare à la fréquence de rotor calculée ($f_{2alg}$) et on utilise la plus grande des deux valeurs de la fréquence du rotor pour déterminer les grandeurs de commande de la machine asynchrone.

2. Procédé selon la revendication 1,
**caractérisé en ce qu'**
on calcule la valeur de la fréquence de rotor ($f_{2alg}$) dans des intervalles de temps de détection déterminés ($T_A$).

3. Procédé selon l'une des revendications précédentes,
**caractérisé en ce qu'**
on effectue le calcul de la fréquence de rotor ($f_{2alg}$, $f_{2grund}$) pour des valeurs corrigées en fonction de l'influence de la température.

4. Procédé selon l'une des revendications précédentes,
**caractérisé en ce qu'**
on effectue le calcul de la fréquence de rotor ($f_{2alg}$) avec un microprocesseur.

5. Procédé selon l'une des revendications précédentes,
**caractérisé en ce qu'**
on effectue le calcul de la fréquence de rotor ($f_{2alg}$) selon le déroulement fondamental suivant :

- initialisation (51, 52) à des instants déterminés ($T_A$), prédéfinition (53) de la valeur de consigne du courant (I1), détermination (54) de la fréquence de base de rotor correspondante ($f_{2grund}$), le cas échéant avec compensation en température, calcul (55) de l'oscillation fondamentale maximale possible de la tension de stator ($U_1$), calcul (56) de la tension d'aimantation principale ($U_H$) en fonction de l'angle de phase ($\varphi_{KL}$), calcul (57) du courant d'aimantation ($I_m$),
- calcul (58) du courant de rotor ($I_{2'}$),
- calcul (59) de la fréquence de rotor ($f_{2alg}$),
- délimitation (510) de la fréquence de rotor ($f_{2alg}$) à une valeur inférieure à celle qui correspond à la fréquence de basculement ($f_{kipp}$),

- calcul (511) de l'angle de phase ($\varphi_{KL}$),
- comparaison (512) pour déterminer si la fréquence de rotor calculée ($f_{2alg}$) est supérieure à la fréquence fondamentale de rotor ($f_{2grund}$),
- et si oui (513), alors on prend (514) la fréquence secondaire de rotor (f2) égale à la fréquence calculée de rotor ($f_{2alg}$),
- si non (515) on fixe (516) la fréquence secondaire de rotor (f2) égale à la fréquence fondamentale de rotor ($f_{2grund}$) et enfin un retour au début de la suite des calculs.

6. Application du procédé selon l'une des revendications précédentes dans le cas de machines asynchrones alimentées à partir de batteries dans des véhicules électriques.

FIG. 1

FIG. 2

FIG. 3

FIG. 4

Anfang — 51

Initialisierung — 52

$T_A$

Vorgabe Sollwert I1 — 53

$f(2grund) = f(I1,T)$ — 54

Berechnung U1 — 55

Berechnung Uh(phi_kl,...) — 56

Berechnung Im — 57

Berechnung I2' — 58

Berechnung f(2alg) — 59

Begrenzung f(2alg)<f(2kipp) — 510

Berechnung phi_kl — 511

f(2alg) > f(2grund)? — 512

n — 515

516

513

j

f(2) = f(2alg) — 514

f(2) = f(2grund)

517

FIG. 5

## FIG. 6

## FIG. 7

## FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

*   **H. GROTSTOLLEN ; J. WIESING.** *ETZ,* 1994, vol. 115 (9), 486-491